# EUROPÄISCHE PATENTSCHRIFT

(11) **EP 1 263 618 B1**
(45) Veröffentlichungstag und Bekanntmachung des Hinweises auf die Patenterteilung: **22.10.2003**
(21) Anmeldenummer: 01919250.9
(22) Anmeldetag: 01.02.2001
(51) Int. Cl.: B60H 1/24, B60H 1/00

(54) **VORRICHTUNG ZUR BELÜFTUNG VON FAHRZEUGSCHEIBEN IN EINEM FAHRZEUG**
DEVICE FOR VENTILATING VEHICLE PANES IN A MOTOR VEHICLE
DISPOSITIF D'AERATION DES VITRES DANS UN VEHICULE

(30) Priorität: 18.02.2000 DE 10007402
(43) Veröffentlichungstag der Anmeldung: 11.12.2002
(73) Patentinhaber: Volkswagen Aktiengesellschaft, 38436 Wolfsburg (DE)
(72) Erfinder: WIENERT, Norbert, 38518 Gifhorn (DE); PICKARTZ, Thomas, 38518 Gifhorn (DE)
(74) Vertreter: Liebl, Thomas, Dipl.-Ing.
(86) Internationale Anmeldenummer: EP0101074
(87) Internationale Veröffentlichungsnummer: WO01060647

(56) Entgegenhaltungen:
- EP-A- 0 765 723
- EP-A- 0 962 342

## Beschreibung

Die Erfindung betrifft eine Vorrichtung zur Belüftung von Fahrzeugscheiben in einem Fahrzeug nach dem Oberbegriff des Anspruchs 1. Als Deformationselement ist dabei ein Bauteil zu verstehen, das bewußt derart konzipiert und angeordnet ist, daß es im Falle eines Crashs durch gezielte Verformung Arbeit aufnimmt und dadurch die auf den Fahrzeuginsassen wirkenden Belastungen verringert.

Bei Kraftfahrzeugen ist es bekannt, dass insbesondere bei kalten oder nassen Witterungen die vorderen und hinteren Seitenscheiben aufgrund von Kondensation an der Innenseite beschlagen oder vereisen können. Um dieses Beschlagen der Scheiben zu vermeiden, ist es für die vorderen Seitenscheiben bekannt, in einem äußeren Konsolenrandbereich einer Fahrzeugfrontkonsole Defrosterdüsen vorzusehen, die auf die vorderen Seitenscheiben gerichtet sind. Eine Belüftung der hinteren Seitenscheiben ist aufgrund der zwischen der hinteren und vorderen Seitenscheibe grundsätzlich vorhandenen B-Säule mit diesen vorderen Defrosterdüsen regelmäßig nicht oder nur schlecht möglich. Daher wird in der DE 32 27 886 A1 vorgeschlagen, eine Säulenverkleidung der B-Säule beabstandet zu dem B-Säulenrahmen anzuordnen dergestalt, dass zwischen dem Verkleidungsteil und dem Rahmenteil ein Luftführungskanal ausgebildet wird. Über diesen Luftführungskanal kann die von den vorderen Defrosterdüsen ausgehende Luftströmung über die vorderen Seitenscheiben nach hinten zu den hinteren Seitenscheiben gelangen. Die Möglichkeit der Luftzuführung zu den hinteren Seitenscheiben ist hier zwar grundsätzlich verbessert, insgesamt ist der Strömungsweg jedoch von den vorderen Defrosterdüsen ausgehend bis zu den hinteren Seitenscheiben hier relativ lang, so dass eine effektive Belüftung nicht oder nur schlecht möglich ist.

Ein ähnlicher Aufbau ist auch aus der JP 7-291050 bekannt.

Aus der gattungsgemäßen EP 0 765 723 A1 ist eine Vorrichtung zur Belüftung von Fahrzeugscheiben in einem Fahrzeug bekannt, die ein in einem Scheibenbereich verlaufendes Rahmenteil einer Fahrzeugkarosserie aufweist, das zum Innenraum hin mit einem Verkleidungsteil abdeckbar ist, wobei im Bereich zwischen dem Rahmenteil und dem Verkleidungsteil ein energieabsorbierendes Element vorgesehen ist, das mit einem Luftführungskanal gekoppelt ist, und wobei wenigstens eine in Richtung auf eine zugeordnete Fahrzeugscheibe gerichtete Auslaßdüse vorgesehen ist.

Konkret ist hier das Rahmenteil durch einen U-förmigen, mit einem Türkasten verbindbaren Fensterrahmen gebildet, an dem zum Innenraum hin ein entsprechend U-förmig ausgebildetes Verkleidungsteil angebracht ist. Das Verkleidungsteil umfaßt eine wannenförmig und im Querschnitt U-förmig gewölbte Außenwand, die mittels eines Deformationsschaums ausgeschäumt wird. In die Gießform ist ein Luftführungskanal eingelegt, der mit eingeschäumt wird. Um Auslaßdüsen in Richtung Fahrzeugscheibe herzustellen, können in das fertig geschäumte Verkleidungsteil in aufwendiger Weise eine Vielzahl von Auslaßdüsen gebohrt werden. Alternativ dazu wird vorgeschlagen, die Auslaßdüsen durch integral mit dem Luftführungskanal ausgebildete oder durch separate Abzweigungsteile auszubilden, wobei jedoch auch hier in aufwendiger Weise in der Außenhaut jeweils den Auslaßdüsen zugeordnete Düsenöffnungen ausgebildet werden müssen. Des weiteren sind mit einem derartiger Aufbau kleine Baugrößen nur sehr schlecht zu realisieren, da für eine hinreichende Energieabsorption insgesamt eine größere Menge an Deformationsschaum benötigt wird, was zwangsläufig auch zu einem groß bauenden Verkleidungsteil führt. Für beengte Einbausituationen ist daher dieser Aufbau nur wenig geeignet.

Weiter ist aus der EP 0 962 342 A2 ein Luftführungskanal bekannt, der durch eine flexible Rohrleitung gebildet ist, wobei eine nicht-metallische Materialschicht wenigstens an der Außenfläche, vorzugsweise an der Innen- und Außenfläche des Luftführungskanals angebracht wird. Als nicht-metallische Materialschicht wird ein starkes Papiermaterial verwendet, das als äußerste und innerste Schicht dem Luftführungskanal zu hohen Hitzebeständigkeitseigenschaften verhilft und zudem eine Kondensation an den Oberflächen des Luftführungskanals, der durch harte Doppelfunktion auch Bestandteil des Deformationselementes ist. Damit ergibt sich eine vorteilhafte Bauteilreduzierung. Das Deformationsblech braucht dabei den Luftführungskanal in der Regel nicht vollständig zu ummanteln, sondern es reicht für die Ausbildung guter Energieabsorptionseigenschaften des Deformationselementes aus, dass dieses den Luftführungskanal lediglich teilweise ummantelt. Somit ergibt sich hier neben einer den Montageaufwand verringernden Bauteilreduzierung auch eine Materialersparnis, was insgesamt zu niedrigen Herstellungskosten führt.

Des weiteren ist ein derartiger Aufbau insbesondere für beengte Einbausituationen geeignet, da durch die Ummantelung des Luftführungskanals kein zusätzlicher Bauraum benötigt wird und somit kleine Baugrößen realisierbar sind.

Von der Bezeichnung Deformationsblech werden dabei auch solchen Materialien und Materialpaarungen erfasst, mit denen der erfindungsgemäße Aufbau ebenfalls in geeigneter Weise realisiert werden kann.

Vorteilhaft ist der Luftführungskanal durch ein Kunststoff-Blasteil mit einem geschlossenen Profil gebildet. In einer bevorzugten Ausführungsform weist der Luftführungskanal einen rechteckförmigen Querschnitt auf. Ein derartiges Kunststoff-Blasteil ist einfach und damit preiswert herzustellen und ermöglicht in der Ausführungsform als geschlossenes Kunststoff-Blasteil zusätzlich eine Erhöhung der Deformationsfunktion im Aufprallbereich.

Um eine gute und gezielte Ausströmung der Luft über die Auslassdüse zu einer zugeordneten Fahrzeugscheibe hin zu ermöglichen, ist der Luftführungskanal in einem seitlichen, der Fahrzeugscheibe zugeordneten Randbereich des Rahmenteils angeordnet. Der Luftführungskanal ist dabei mit dem Rahmenteil lösbar verbindbar, beispielsweise durch eine schnell montierbare Schraubverbindung. Vorzugsweise ist der Luftführungskanal auch im Anbindungsbereich an das Rahmenteil vom Deformationsblech ummantelt, so dass bei der Verschraubung des Luftführungskanals mit dem Rahmenteil gleichzeitig auch das Deformationsblech mit verschraubt wird. Alternativ dazu kann statt einer Schraubverbindung grundsätzlich auch jede andere geeignete Verbindungsart vorgesehen sein, z.B. eine Klippverbindung. Damit ist grundsätzlich eine einfache und schnelle Montage gewährleistet.

Aufgabe der Erfindung ist es, eine alternative Vorrichtung zur Belüftung von Fahrzeugscheiben in einem Fahrzeug zu schaffen, die einfach und preiswert herstellbar ist.

Diese Aufgabe wird gelöst mit den Merkmalen des Anspruchs 1.

Gemäß Anspruch 1 ist das energieabsorbierende Element durch ein Deformationsblech gebildet, mit dem der Luftführungskanal wenigstens in einem Aufprallbereich wenigstens teilweise ummantelt ist dergestalt, dass der Luftführungskanal im Aufprallbereich zusammen mit dem Deformationsblech ein Deformationselement ausbildet, wobei der Luftführungskanal durch ein Kunststoff-Blasteil mit einem geschlossenen Profil gebildet ist.

Vorteilhaft ergibt sich hiermit eine Funktionsintegration, indem der Luftführungskanal im Aufprallbereich in herkömmlicher Weise zur Luftführung dient und zusätzlich in einer Vorzugsweise ist der Luftführungskanal mit einer Luftzuführ- und/oder einer Luftabsaugleitung einer Belüftungs- und/oder Absaugeinrichtung gekoppelt. Dies ist vorzugsweise eine regulierbare Klimaanlage, über die auch eine Regelung der Luftzufuhr oder Luftabsaugung durch den Luftführungskanal möglich ist. Vorteilhaft wäre damit auch erreichbar, dass von einer vom Fahrer eines Fahrzeugs aus gut erreichbaren Stelle aus die Luftzufuhr und/oder Luftabsaugung zentral gesteuert werden könnte.

In einer weiteren bevorzugten Ausführungsform ist die wenigstens eine Auslassdüse im Luftführungskanal durch abgekröpfte Führungskanalwandbereiche als Düsenwände gebildet. Bevorzugt ist die Abkröpfung dabei in einem nicht mit dem Deformationsblech ummantelten Bereich des Luftführungskanals ausgebildet, z.B. in einem in Richtung einer Fahrzeugscheibe ausgerichteten Eckbereich eines im Querschnitt in etwa rechteckförmig ausgebildeten Luftführungskanals. Eine derartige Abkröpfung der Führungskanalwände ist einfach herzustellen, wobei je nach Einbausituation eine oder mehrere Auslassdüsen vorgesehen sein können. Weiter erfolgt hier durch die integrale Ausbildung der Auslassdüse oder Auslassdüsen am Luftführungskanal durch Abkröpfen von Führungskanalwandbereichen eine zusätzliche Bauteilreduzierung durch Funktionsintegration. Der Luftführungskanal als derart funktionsintegriertes Bauteil kann auf einfache Weise schnell vormontiert und weiter ebenso im Rahmen der Endmontage schnell verbaut werden.

Für eine vorteilhafte Abdichtung ist vorgesehen, dass endseitig an den Düsenwänden jeweils ein Dichtelement angeordnet ist. Über dieses Dichtelement ist die Auslassdüse und damit der Luftführungskanal je nach Einbauort und Einbausituation gegenüber dem Rahmenteil und/oder dem Verkleidungsteil sowie ggf. damit verbundenen zusätzlichen Elementen abdichtbar. Besonders bevorzugt liegt das Dichtelement z.B. für einen Toleranzausgleich unter Vorspannung am Rahmenteil und/oder am Verkleidungsteil an. Neben diesem Toleranzausgleich ist durch diese Vorspannung des Dichtelements gleichzeitig auch eine besonders gute Dichtfunktion gewährleistet.

In einer ersten konkreten Ausführungsform ist das Dichtelement auf die Düsenwände aufsteckbar. In einer dazu alternativen Ausführungsform sind an den Düsenwänden endseitig Anlagerippen für damit und/oder mit den Düsenwänden verbindbare Dichtelemente angeordnet. Vorzugsweise sind die Dichtelemente hier als mit den Düsenwänden oder den Anlagerippen verklebbare Schaumstoffdichtungen ausgebildet.

Für eine gezielte Luftströmung, insbesondere für eine erwünschte laminare Luftströmung, ist im Bereich jeder Auslassdüse wenigstens eine Blende angeordnet. Diese Blenden umfassen vorzugsweise Strömungslamellen, die eine noch gezieltere Luftströmung ermöglichen. Die Blende kann dabei je nach Einbausituation und Ausführungsform entweder am Rahmenteil und/oder am Verkleidungsteil und/oder am Luftführungskanal gehaltert sein.

In einer besonders bevorzugten konkreten Ausführungsform ist das Rahmenteil Bestandteil einer B-Säule eines Kraftfahrzeugs, wobei die wenigstens eine Auslassdüse auf eine dieser B-Säule benachbarte hintere Seitenscheibe gerichtet ist. Vorteilhaft ergibt sich bei einer solchen Anordnung in einer B-Säule eines Kraftfahrzeugs hiermit, dass auf einfache Weise ein Beschlagen der hinteren Seitenscheiben bei einer entsprechenden kalten oder nassfeuchten Witterung vermeidbar ist. Der Luftführungskanal kann dann hier als Defrosterkanal und die Auslassdüse als Defrosterdüse fungieren. Grundsätzlich kann aber das Rahmenteil auch an jeder anderen beliebigen Stelle des Fahrzeugs angeordnet sein, so z. B im Bereich der A- oder C-Säulen eines Kraftfahrzeugs.

Vorteilhaft ist der Luftführungskanal in der B-Säule in etwa vom Dachbereich ausgehend nach unten, vorzugsweise bis in den Fahrzeugbodenbereich geführt und dort an eine Luftzuführleitung angeschlossen. Der Luftführungskanal ist in einer konkreten Ausführungsform im oberen Bereich wenigstens teilweise oder bereichsweise mit dem Deformationsblech ummantelt. Dieses Deformationsblech weist vorzugsweise eine Stärke von in etwa 0,7 mm auf. Damit ergeben sich gute Energieabsorptionseigenschaften im Falle eines Aufpralls, z. B eines Kopfaufpralls.

Anhand einer Zeichnung wird die Erfindung näher erläutert.

Es zeigen:
- Fig. 1 eine: schematische Darstellung eines in einer B-Säule verlaufenden Luftzuführkanals,
- Fig. 2: einen schematischen Querschnitt durch die B-Säule entlang der Linie A-A der Fig. 1,
- Fig. 3: eine vergrößerte Detailansicht der Einzelheit R der Fig. 2 und
- Fig. 4: eine alternative Ausführungsform zu der in der Fig. 3 dargestellten Einzelheit R.

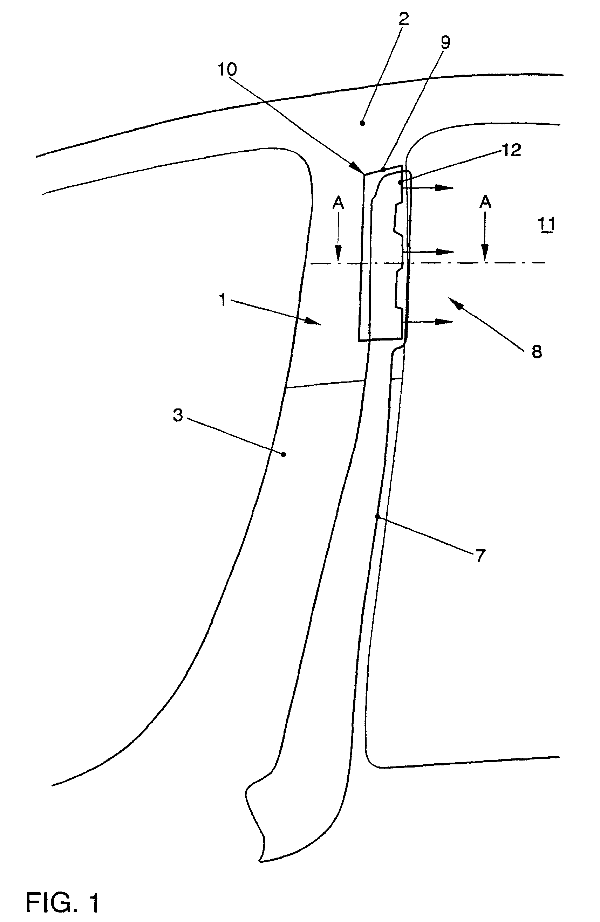

In der Fig. 1 ist schematisch eine Vorrichtung 1 zur Belüftung einer hinteren Seitenscheibe 11 eines Fahrzeugs 2 in Verbindung mit einer B-Säule 3 des Fahrzeugs 2 schematisch dargestellt.

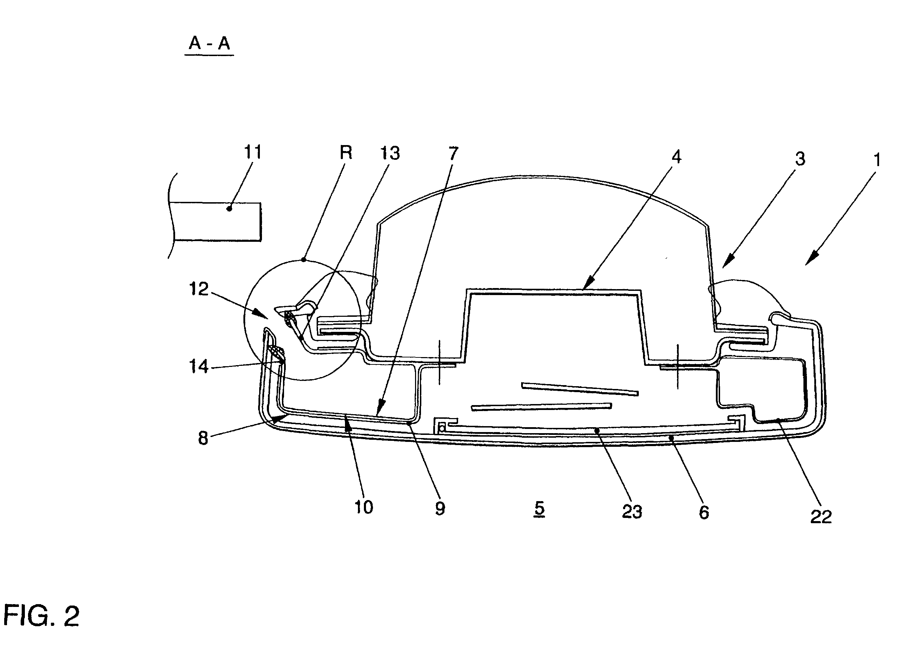

Wie dies insbesondere aus der Fig. 2 ersichtlich ist, die einen Schnitt entlang der Linie A-A der Fig. 1 zeigt, ist die B-Säule 3 durch ein als Hohlprofil ausgebildetes, tragendes Rahmenteil 4 ausgebildet, das zum Fahrzeuginnenraum 5 hin mit einem Verkleidungsteil 6 abgedeckt ist.

Wie dies aus der Fig. 2 weiter ersichtlich ist, ist im Bereich zwischen dem Rahmenteil 4 und dem Verkleidungsteil 6 ein im Querschnitt rechteckförmiger Luftführungskanal 7 vorgesehen, der wenigstens in einem in der Fig. 1 schematisch dargestellten Aufprallbereich 8 teilweise mit einem Deformationsblech 9 ummantelt ist, so dass der Luftführungskanal 7 im Aufprallbereich 8 zusammen mit dem Deformationsblech 9 in einer Doppelfunktion zusätzlich zu der herkömmlichen Luftführungsfunktion auch ein Deformationselement 10 ausbildet.

Wie dies aus der Fig. 2 weiter ersichtlich ist, ist der Luftführungskanal 7 in einem seitlichen, der hinteren Seitenscheibe 11 zugeordneten Randbereich des Rahmenteils 4 angeordnet und mit diesem verschraubt.

Der Fig. 2 kann weiter entnommen werden, dass im Bereich zwischen dem Verkleidungsteil 6 und dem Rahmenteil 4 auf der gegenüberliegenden Seite des Luftführungskanals 7 ein geschlossenes und im Querschnitt in etwa rechteckförmiges Deformationsblech 22 als weiteres Deformationsprofil sowie in einem mittleren Bereich des Verkleidungsteils 6 eine Gurthöhenverstelleinrichtung 23 vorgesehen ist.

Der Luftführungskanal 7 ist als ein Kunststoff-Blasteil mit einem geschlossenen Profil ausgebildet, wobei sich der Luftführungskanal 7 in der B-Säule 3 in etwa vom Dachbereich ausgehend nach unten, bis vorzugsweise in den Fahrzeugbodenbereich erstreckt, wie dies insbesondere aus der Fig. 1 ersichtlich ist. Dort ist der Luftführungskanal 7 mit einer Luftzuführ- und/oder einer Luftabsaugleitung für eine Luftzufuhr oder eine Luftabsaugung gekoppelt, was allerdings in Fig. 1 nicht dargestellt ist.

Der Fig.2 kann weiter entnommen werden, dass eine Auslassdüse 12 im Luftführungskanal 7 durch abgekröpfte Führungskanalwandbereiche als Düsenwände 13, 14 gebildet ist. Wie dies aus der Darstellung der Fig. 2 ersichtlich ist, ist der Luftführungskanal 7 im die Düsenwände 13, 14 ausbildenden Bereich nicht mit dem Deformationsblech 9 ummantelt.

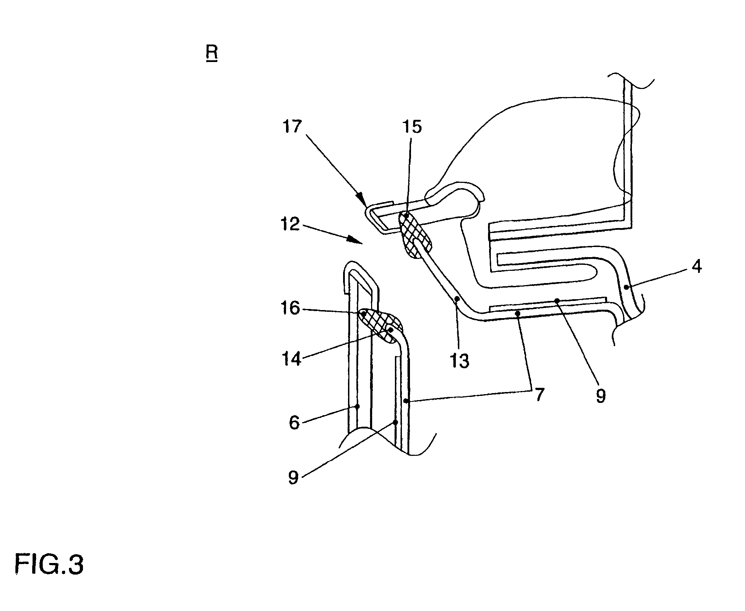

Wie dies insbesondere aus der Fig. 3 ersichtlich ist, die die Einzelheit R der Fig. 2 in vergrößerter Darstellung zeigt, ist endseitig auf die Düsenwände 13, 14 der Auslassdüse 12 jeweils eine Elastomerdichtung 15, 16 aufgesteckt. Dabei liegt die Elastomerdichtung 15 der Düsenwand 13 an einem Randbereich des Verkleidungsteils 6 und die Elastomerdichtung 16 der Düsenwand 14 über eine Blende 17 am Rahmenteil 4 an. Die Elastomerdichtungen 15, 16 liegen ferner im montierten Zustand unter einer Vorspannung an den jeweils zugeordneten Bauteilen an, um eine möglichst gute Abdichtung in Verbindung mit einem evtl. Toleranzausgleich zu ermöglichen.

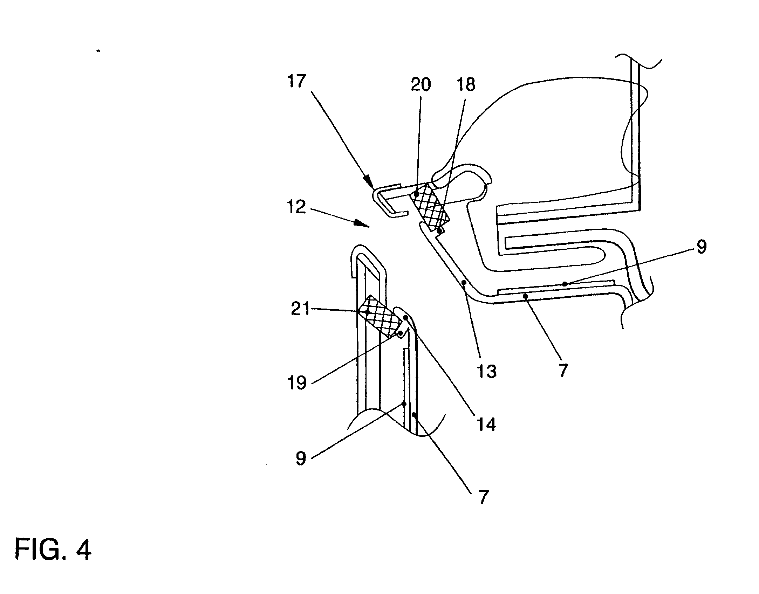

In der Fig. 4 ist eine alternative Ausführungsform der Dichtungsanordnung gemäß Fig. 3 dargestellt, wobei hier an den Düsenwänden 13, 14 zusätzlich endseitige Anlagerippen 18, 19 ausgebildet sind, an denen Schaumstoffdichtungen 20, 21 abgestützt sind. Diese Schaumstoffdichtungen 20, 21 sind vorzugsweise sowohl mit den Anlagerippen 18, 19 als auch mit den Düsenwänden 13, 14 verklebt und liegen ebenfalls unter einer Vorspannung an den zugeordneten Bauteilen der Vorrichtung 1 an.

Falls die hintere Seitenscheibe 11 beschlagen sein sollte kann über eine Regelung der Luftzufuhr zu dem Luftführungskanal 7 warme Luft über die dann als Defrosterdüse fungierende Auslassdüse 12 auf die hintere Seitenscheibe 11 ausgeblasen werden, wobei sich durch die spezielle Ausbildung der Auslassdüse 12 mit den Düsenwänden 13, 14 eine bevorzugte laminare Strömung einstellt.

### BEZUGSZEICHENLISTE

- 1: Vorrichtung
- 2: Fahrzeug
- 3: B-Säule
- 4: Rahmenteil
- 5: Fahrzeuginnenraum
- 6: Verkleidungsteil
- 7: Luftführungskanal
- 8: Aufprallbereich
- 9: Deformationsblech
- 10: Deformationselement
- 11: Seitenscheibe
- 12: Auslassdüse
- 13: Düsenwand
- 14: Düsenwand
- 15: Elastomerdichtung
- 16: Elastomerdichtung
- 17: Blende
- 18: Anlagerippe
- 19: Anlagerippe
- 20: Schaumstoffdichtung
- 21: Schaumstoffdichtung
- 22: Deformationsblech
- 23: Gurthöhenverstelleinrichtung

## Patentansprüche

1. Vorrichtung (1) zur Belüftung von Fahrzeugscheiben in einem Fahrzeug, mit einem in einem Scheibenbereich verlaufenden Rahmenteil (4) einer Fahrzeugkarosserie, das zum Innenraum (5) hin mit einem Verkleidungsteil (6) abdeckbar ist, wobei im Bereich zwischen dem Rahmenteil und dem Verkleidungsteil ein Luftführungskanal (7) vorgesehen ist, der mit einem energieabsorbierenden Element (9) gekoppelt ist, und wobei wenigstens eine in Richtung auf eine zugeordnete Fahrzeugscheibe gerichtete Auslassdüse (12) vorgesehen ist,
**dadurch gekennzeichnet,**
**dass** das energieabsorbierende Element durch ein Deformationsblech (9) gebildet ist, mit dem der Luftführungskanal (7) wenigstens in einem Aufprallbereich (8) wenigstens teilweise ummantelt ist dergestalt, dass der Luftführungskanal (7) im Aufprallbereich zusammen mit dem Deformationsblech (9) ein Deformationselement (10) ausbildet, und
**dass** der Luftführungskanal (7) durch ein Kunststoff-Blasteil mit einem geschlossenen Profil gebildet ist.

2. Vorrichtung nach Anspruch 1, **dadurch gekennzeichnet, dass** der Luftführungskanal (7) in einem seitlichen, der Fahrzeugscheibe (11) zugeordneten Randbereich des Rahmenteils (4) angeordnet ist, und dass der Luftführungskanal (7) zusammen mit dem Deformationsblech (9) lösbar mit dem Rahmenteil (4) verbindbar ist.

3. Vorrichtung nach Anspruch 1 oder Anspruch 2, **dadurch gekennzeichnet, dass** der Luftführungskanal (7) mit einer Luftzuführ- und/oder einer Luftabsaugleitung einer Belüftungs- und/oder Absaugeinrichtung gekoppelt ist.

4. Vorrichtung nach einem der Ansprüche 1 bis 3, **dadurch gekennzeichnet, dass** die wenigstens eine Auslassdüse (12) im Luftführungskanal (7) durch abgekröpfte Führungskanalwandbereiche als Düsenwände (13, 14) gebildet ist.

5. Vorrichtung nach Anspruch 4, **dadurch gekennzeichnet, dass** endseitig an den Düsenwänden (13, 14) jeweils ein Dichtelement (15, 16; 20, 21) vorgesehen ist, über die die Auslassdüse (12) und damit der Luftführungskanal (7) gegenüber dem Rahmenteil (4) und/oder dem Verkleidungsteil (6) abdichtbar ist.

6. Vorrichtung nach Anspruch 5, **dadurch gekennzeichnet, dass** das Dichtelement (15, 16; 20, 21) unter Vorspannung am Rahmenteil (4) und/oder am Verkleidungsteil (6) anliegt.

7. Vorrichtung nach Anspruch 5 oder Anspruch 6, **dadurch gekennzeichnet, dass** das Dichtelement (15, 16) auf die Düsenwände aufsteckbar ist.

8. Vorrichtung nach Anspruch 5 oder Anspruch 6, **dadurch gekennzeichnet, dass** an den Düsenwänden (13, 14) endseitig Anlagerippen (18, 19) für damit und/oder mit den Düsenwänden (13, 14) verbindbare Dichtelemente (20, 21) angeordnet sind.

9. Vorrichtung nach einem der Ansprüche 1 bis 8, **dadurch gekennzeichnet, dass** im Bereich jeder Auslassdüse (12) wenigstens eine Blende (17) zur gezielten Luftströmung angeordnet ist.

10. Vorrichtung nach Anspruch 9, **dadurch gekennzeichnet, dass** die Blende (17) am Rahmenteil (4) und/oder am Verkleidungsteil (6) und/oder am Luftführungskanal (7) gehaltert ist.

11. Vorrichtung nach einem der Ansprüche 1 bis 10, **dadurch gekennzeichnet, dass** das Rahmenteil (4) Bestandteil einer B-Säule (3) eines Kraftfahrzeugs (2) ist und die wenigstens eine Auslassdüse (12) auf eine dieser B-Säule (3) benachbarte hintere Seitenscheibe (11) gerichtet ist.

12. Vorrichtung nach Anspruch 11, **dadurch gekennzeichnet, dass** der Luftführungskanal (7) in der B-Säule (3) in etwa vom Dachbereich ausgehend nach unten geführt ist, und dass der Luftführungskanal (7) im oberen Bereich wenigstens teilweise oder bereichsweise mit dem Deformationsblech (9) ummantelt ist.

13. Vorrichtung nach einem der Ansprüche 1 bis 12, **dadurch gekennzeichnet, dass** das Deformationsblech (9) eine Stärke von in etwa 0,7 mm aufweist.

## Claims

1. Device (1) for ventilating vehicle windows in the vehicle, with a vehicle-body frame part (4) which runs in a window region and can be covered towards the interior (5) by a trim panel (6), an air-guiding duct (7) being provided in the region between the frame part and the trim panel, the said duct being coupled to an energy-absorbing element (9), and at least one outlet nozzle (12) which is directed towards an associated vehicle window being provided, **characterized in that** the energy-absorbing element is formed by a deformation plate (9) with which the air-guiding duct (7) is at least partially encased, at least in an impact region (8), in such a manner that the air-guiding duct (7) forms a deformation element (10) together with the deformation plate (9) in the impact region, and **in that** the air-guiding duct (7) is formed by a plastic blow-moulded part with a closed profile.

2. Device according to Claim 1, **characterized in that** the air-guiding duct (7) is arranged in a lateral edge region of the frame part (4), which region is assigned to the vehicle window (11), and **in that** the air-guiding duct (7) can be connected releasably to the frame part (4) together with the deformation plate (9).

3. Device according to Claim 1 or Claim 2, **characterized in that** the air-guiding duct (7) is coupled to an air supply line and/or an air extraction line of a ventilation and/or extraction device.

4. Device according to one of Claims 1 to 3, **characterized in that** the at least one outlet nozzle (12) in the air-guiding duct (7) is formed by bent guiding-duct wall regions as the nozzle walls (13, 14).

5. Device according to Claim 4, **characterized in that** a sealing element (15, 16; 20, 21) is provided in each case on the end sides of the nozzle walls (13, 14) and can be used to seal off the outlet nozzle (12) and therefore the air-guiding duct (7) with respect to the frame part (4) and/or the trim panel (6).

6. Device according to Claim 5, **characterized in that** the sealing element (15, 16; 20, 21) bears under prestress against the frame part (4) and/or against the trim panel (6).

7. Device according to Claim 5 or Claim 6, **characterized in that** the sealing element (15, 16) can be plugged onto the nozzle walls.

8. Device according to Claim 5 or Claim 6, **characterized in that** bearing ribs (18, 19) are arranged on the end sides of the nozzle walls (13, 14) for sealing elements (20, 21) which can be connected to them and/or to the nozzle walls (13, 14).

9. Device according to one of Claims 1 to 8, **characterized in that** at least one panel (17) for the targeted flow of air is arranged in the region of each outlet nozzle (12).

10. Device according to Claim 9, **characterized in that** the panel (17) is secured on the frame part (4) and/or on the trim panel (6) and/or on the air-guiding duct (7).

11. Device according to one of Claims 1 to 10, **characterized in that** the frame part (4) is part of a B-pillar (3) of a motor vehicle (2), and the at least one outlet nozzle (12) is directed at a rear side window (11) which is adjacent to this B-pillar (3).

12. Device according to Claim 11, **characterized in that** the air-guiding duct (7) is guided downward in the B-pillar (3) starting approximately from the roof region, and **in that** the air-guiding duct (7) is covered in the upper region at least partially or in some regions by the deformation plate (9).

13. Device according to one of Claims 1 to 12, **characterized in that** the deformation plate (9) has a thickness of approximately 0.7 mm.

## Revendications

1. Dispositif (1) pour la ventilation de vitres de véhicules dans un véhicule, comprenant une partie de cadre (4) d'une carrosserie du véhicule s'étendant dans une région de la vitre, laquelle peut être recouverte vers l'espace intérieur (5) par une partie d'habillage (6), un conduit d'air (7) étant prévu dans la région entre la partie de cadre et la partie d'habillage, lequel est accouplé à un élément (9) absorbant l'énergie, et au moins une buse de sortie (12) orientée dans la direction d'une vitre de véhicule associée étant prévue,
**caractérisé en ce que**
l'élément absorbant l'énergie est formé par une tôle de déformation (9) par laquelle le conduit d'air (7) est enveloppé au moins partiellement au moins dans une région d'impact (8), de telle sorte que le conduit d'air (7) constitue dans la région d'impact, conjointement avec la tôle de déformation (9), un élément de déformation (10), et
**en ce que** le conduit d'air (7) est formé par une pièce soufflée en plastique avec un profil fermé.

2. Dispositif selon la revendication 1, **caractérisé en ce que** le conduit d'air (7) est disposé dans une partie marginale latérale de la partie de cadre (4) associée à la vitre du véhicule (11), et **en ce que** le conduit d'air (7) conjointement avec la tôle de déformation (9) peut être connecté de manière détachable à la partie de cadre (4).

3. Dispositif selon la revendication 1 ou la revendication 2, **caractérisé en ce que** le conduit d'air (7) est accouplé à une conduite d'alimentation en air et/ou une conduite d'aspiration d'air d'un dispositif de ventilation et/ou d'aspiration.

4. Dispositif selon l'une quelconque des revendications 1 à 3, **caractérisé en ce que** l'au moins une buse de sortie (12) est formée dans le conduit d'air (7) par des régions de paroi de conduit coudées servant de parois de buse (13, 14).

5. Dispositif selon la revendication 4, **caractérisé en ce qu'**un élément d'étanchéité (15, 16 ; 20, 21) est prévu respectivement du côté de l'extrémité sur les parois de buse (13, 14), par le biais duquel la buse de sortie (12) et de ce fait le conduit d'air (7) peuvent être rendus étanches par rapport à la partie de cadre (4) et/ou la partie d'habillage (6).

6. Dispositif selon la revendication 5, **caractérisé en ce que** l'élément d'étanchéité (15, 16 ; 20, 21) s'applique avec une précontrainte contre la partie de cadre (4) et/ou contre la partie d'habillage (6).

7. Dispositif selon la revendication 5 ou la revendication 6, **caractérisé en ce que** l'élément d'étanchéité (15, 16) peut être enfiché sur les parois de buse.

8. Dispositif selon la revendication 5 ou la revendication 6, **caractérisé en ce que** des nervures d'appui (18, 19) du côté de l'extrémité sont disposées sur les parois de buse (13, 14) pour des éléments d'étanchéité (20, 21) pouvant leur être connectés et/ou pouvant être connectés aux parois de buse (13, 14).

9. Dispositif selon l'une quelconque des revendications 1 à 8, **caractérisé en ce que** dans la région de chaque buse de sortie (12), au moins un bandeau (17) est prévu pour l'écoulement ciblé de l'air.

10. Dispositif selon la revendication 9, **caractérisé en ce que** le bandeau (17) est fixé sur la partie de cadre (4) et/ou sur la partie d'habillage (6) et/ou sur le conduit d'air (7).

11. Dispositif selon l'une quelconque des revendications 1 à 10, **caractérisé en ce que** la partie de cadre (4) fait partie d'une colonne B (3) d'un véhicule automobile et l'au moins une buse de sortie (12) est orientée vers une vitre latérale arrière (11) voisine de cette colonne B (3).

12. Dispositif selon la revendication 11, **caractérisé en ce que** le conduit d'air (7) est guidé vers le bas dans la colonne B (3) approximativement depuis la région du toit, et **en ce que** le conduit d'air (7) est au moins partiellement ou en partie enveloppé par la tôle de déformation (9) dans la région supérieure.

13. Dispositif selon l'une quelconque des revendications 1 à 12, **caractérisé en ce que** la tôle de déformation (9) présente une épaisseur d'environ 0,7 mm.
